# EUROPÄISCHE PATENTSCHRIFT

(11) **EP 2 136 982 B1**
(45) Veröffentlichungstag und Bekanntmachung des Hinweises auf die Patenterteilung: **29.05.2013**
(21) Anmeldenummer: 08735210.0
(22) Anmeldetag: 14.04.2008
(51) Int. Cl.: B29C 41/46, B29C 33/04, B29C 41/18, B29C 41/38

(54) **FORM UND VERFAHREN ZUR HERSTELLUNG VON FORMHÄUTEN UND FORMKÖRPERN AUS KUNSTSTOFF**
MOLD AND METHOD FOR PRODUCING MOLDED SKINS AND MOLDED BODIES MADE OF PLASTIC
MOULE ET PROCÉDÉ POUR LA FABRICATION DE PEAUX ET DE CORPS MOULÉS EN PLASTIQUE

(30) Priorität: 25.04.2007 DE 102007019862
(43) Veröffentlichungstag der Anmeldung: 30.12.2009
(73) Patentinhaber: SMP Deutschland GmbH, 79268 Bötzingen (DE)
(72) Erfinder: BIANCHI, Willi, 21339 Lüneburg (DE)
(74) Vertreter: Neunert, Peter Andreas
(86) Internationale Anmeldenummer: PCT/EP2008/002928
(87) Internationale Veröffentlichungsnummer: WO 2008/131855

(56) Entgegenhaltungen:
- WO-A-03/097318
- DE-A1- 2 817 030
- US-A- 4 683 098
- US-A- 5 106 285
- US-A1- 2001 020 757
- DATABASE WPI Week 198543 Thomson Scientific, London, GB; AN 1985-266390 XP002485407 & JP 60 178014 A (MITSUBOSHI BELTING LTD) 12. September 1985 (1985-09-12)
- DATABASE WPI Week 198745 Thomson Scientific, London, GB; AN 1987-318562 XP002485408 & JP 62 227610 A (TOYOTA JIDOSHA KK) 6. Oktober 1987 (1987-10-06)

## Beschreibung

Die vorliegende Erfindung betrifft eine Form zur Herstellung von Formhäuten und Formkörpern aus Kunststoff nach dem Oberbegriff des Anspruchs 1 sowie ein Verfahren zur Herstellung von Formhäuten und Formkörpern aus Kunststöff.

Verfahren zum Herstellen von Formhäuten oder Formteilen sind unter dem Begriff Rotationsgießen, Rotationssintern oder Slushverfahren bekannt. Bei diesen Verfahren werden Formen mit rieselfähigem oder auch flüssigem Kunststoff gefüllt, der dann unter Zufuhr von Wärme aufgeschmolzen wird, so dass sich an der Oberfläche der Form eine dünne Kunststoffschicht ausbildet. Das überschüssige Kunststoffmaterial kann anschließend ausgeschüttet werden, bevor beispielsweise durch weiteres Erhitzen ein weiterer Materialaufbau oder eine chemische Veränderung stattfindet. Nach dem Abkühlen der Form kann der fertige Formkörper oder die Formhaut der Form entnommen werden. Üblicherweise erfolgt das Einfüllen des rieselfähigen Kunststoffmaterials in Form von Pulver oder Granulat durch Aufsetzen oder Andocken eines sogenannten Pulverkastens an die mit ihrer Öffnung nach unten gekehrten Form, die dann zusammen mit dem Pulverkasten gedreht wird, so dass das Kunststoffpulver oder -granulat in die Form fällt und auf die oben geschilderte Weise verarbeitet wird.

Die Wärmezufuhr kann durch vorheriges Einschieben der Form in eine Heißluftkammer erfolgen. Dies hat allerdings den Nachteil, dass das Aufheizen und Abkühlen der Form sehr lange dauert, so dass der Durchsatz bei dieser konventionellen Verfahrensweise nicht sehr hoch ist. Hinzu kommt, dass beim Einsatz von Heißluftkammern oder -öfen die Prozesskontrolle, insbesondere die Temperaturüberwachung, unbefriedigend ist.

Es sind Verfahren bekannt, die Herstellung von Kunststoffhäuten oder Formteilen durch den Einsatz von doppelwandigen Formen, die mit einem Kühl- oder Heizmedium befüllt werden können, zu beschleunigen.

So wird in der DE 41 06 964 C2 eine Vorrichtung zur Herstellung von Formhäuten und Formkörpern aus Kunststoff beschrieben, bei der eine doppelwandige Galvanoform zum Einsatz kommt, an deren Rückwand eine Vielzahl von Einlauföffnungen und Auslauföffnungen für das Heiz- und Kühlmedium ausgebildet sind, mit deren Hilfe ein schnelles und über die gesamte Fläche der Form gleichmäßiges Aufheizen und Abkühlen erreicht werden kann. Dabei sind die Einlauföffnungen nicht unbedingt gleichmäßig verteilt, sondern es sind bei besonderen Ausführungsformen auch Konzentrationen der Zufuhr des Heiz- oder Kühlmediums an bestimmten Stellen vorgesehen, die primär dazu dienen, Wanddickenunterschiede in der Formwand auszugleichen, die bei der Herstellung der Form auf galvanischem Wege unvermeidbar sind.

Zwar können auf diese Weise auch unterschiedliche Wanddicken erhalten werden, zur gezielten Herstellung unterschiedlicher Wandstärken in der Formhaut ist dieses Verfahren jedoch nur bedingt geeignet, da zum einen der apparative Aufwand sehr groß ist und zum anderen die Temperaturunterschiede auf der Formwand relativ gering sind und gleichzeitig die Temperaturübergänge undefiniert und verschwommen sind, so dass dieses Verfahren nicht sonderlich gut geeignet ist, gezielt Bereiche mit geringerer oder höherer Wandstärke zu realisieren.

Bei im Slushverfahren hergestellten Formhäuten zur Herstellung von Armaturentafeln von Kraftfahrzeugen sind jedoch die Anforderungen an die Wandstärke der Formhaut unterschiedlich, je nachdem welche Bereiche mit der Formhaut abgedeckt werden sollen. So wird im Airbagbereich eine Formhautdicke von ca. 1,2 mm angestrebt, während im Restbereich eine Dicke von 0,9 mm ausreichend ist, woraus sich ein nicht unerhebliches Potential zur Materialeinsparung ergibt, wenn es gelingen sollte, gezielt unterschiedliche Wandstärken zu realisieren.

Im Bereich der Armaturen selber sind Öffnungen vorzusehen, die in einem zusätzlichen Arbeitsgang in die fertige Formhaut eingebracht werden müssen, was neben dem Mehraufwand an Arbeit zusätzlich Materialverlust durch entsprechenden Abfall mit sich bringt.

Es sind Verfahren bekannt, durch entsprechende Steuerung des Kühl- bzw. Heizmediums bzw. unterschiedliche Heiz- oder Ölkreisläufe die Wanddicken der Formhäute oder Formkörper zu beeinflussen und unterschiedlich zu gestalten.

So ist aus der DE 28 17 030 A1 ein Verfahren zum Herstellen von Formhäuten bekannt, bei dem die Form unterschiedliche Bereiche mit unterschiedlichen Flüssigkeitspassagen aufweist, wodurch die Erzeugung unterschiedlicher Wanddicken ermöglicht wird. Dieses Verfahren hat allerdings den Nachteil, dass es einen enorm hohen apparativen Aufwand erfordert.

Es besteht somit weiterhin der Bedarf an einem Verfahren bzw. einer Vorrichtung, auf einfache Weise Formhäute mit unterschiedlicher Wandstärke oder sogar fertigen Aussparungen herzustellen.

Es ist Aufgabe der Erfindung eine Form zur Verfügung zu stellen, bei deren Verwendung auf einfache Weise eine Formhaut mit unterschiedlichen Wandstärken bzw. Aussparungen hergestellt werden kann. Gelöst wird diese Aufgabe durch eine Form mit den Merkmalen des Anspruchs 1 und ein Verfahren mit den Merkmalen des Anspruchs 8.

Es ist auch eine Aufgabe der Erfindung eine Form zur Verfügung zu stellen, mit deren Hilfe die Herstellung von Formhäuten oder Formkörpern beschleunigt werden kann und gleichzeitig Energie eingespart wird. Auch diese Aufgabe wird durch eine Form mit den Merkmalen des Anspruchs 1 gelöst.

Vorteilhafte Ausführungsformen der erfindungsgemäßen Form sind in den Unteransprüchen wiedergegeben.

Ausgehend von einer zur Zufuhr eines Heiz- und Kühlmediums ausgebildeten doppelwandigen Form mit einer formgebenden Vorderwand, einer Rückwand sowie einer seitlichen Abdichtung zwischen Vorderwand und Rückwand wurde gefunden, dass durch gezieltes Einbringen von Hohlkammern in der Vorderwand der Wärmetransport vom Heiz- oder Kühlmedium zur formgebenden Innenkontur der Vorderwand soweit beeinflusst werden kann, dass die Abscheidung einer Kunststoffhaut an der betreffenden Stelle auf der Vorderwand eingeschränkt bzw. ganz unterbunden wird. Die Hohlkammer wirkt dabei als Isolation und verhindert einen Wärmeübergang vom Heiz- bzw. Kühlmedium auf die Innenkontur der Vorderwand.

Hohlkammern in der Rückwand der Form besitzen ebenfalls eine isolierende Wirkung und schützen vor Wärmeverlusten während des Herstellprozesses, der durch den Einsatz von Hohlkammern in der Rückwand bei geringerem Energieeinsatz gleichzeitig beschleunigt wird.

Die Ausbildung der Hohlkörper ist abhängig von der Art der Form. So kann beispielsweise die Hohlkammer bei einer geschweißten Form auf die Wand aufgelötet oder geschweißt sein, während bei einer galvanisch hergestellten Wand die Hohlkammer direkt beim Galvanisieren selber ausgebildet wird, indem eine erste abgeschiedene galvanische Schicht an den Bereichen, an denen Hohlkammern ausgebildet werden sollen, mit Wachs beschichtet werden, so dass sich an diesen Stellen beim weiteren Galvanisieren eine doppelseitige Wand mit einem Wachseinschluss ausbildet. Nach dem Fertigstellen der Wand wird die Kammer geöffnet und das Wachs kann durch Ausschmelzen entfernt werden.

Da die Vorderwand der Form auf ihrer Rückseite vom Heiz- bzw. Kühlmedium umspült wird, während sich auf ihrer Vorderseite die Kunststoffhaut abscheidet, ist es erforderlich, dass die Hohlkammer im Bereich der Vorderwand geschlossen und evakuierbar ausgeführt ist, um auf diese Weise ein Eindringen des Heiz- bzw. Kühlmediums in die Kammer und gleichzeitig eine Gasexpansion in der geschlossenen Kammer zu verhindern.

Die Ausbildung von einer oder mehreren Hohlkammern auf der Rückwand der Hohlform bewirkt eine Isolierung des Kühl- bzw. Heizmediums gegenüber der Außenwand und dient ausschließlich der Energieeinsparung sowie der Beschleunigung des Herstellprozesses. Da bei der Rückwand lediglich die in das Innere der Hohlform zeigende Vorderseite mit einem Fremdmedium in Berührung kommt, sind die Hohlkammern in der Rückwand nicht geschlossen, sondern weisen auf der dem Heiz- und Kühlmedium abgewandten Seite eine Öffnung auf.

Die seitliche Abdichtung zwischen der Vorder- und der Rückwand wird vorteilhaft durch eine Art Tragrahmen gebildet, der Vorderwand und Rückwand zusammenhält.

Die als doppelwandiger Hohlkörper ausgebildete Form besitzt mindestens jeweils eine Einlauf- und Auslauföffnung für das Heiz- und Kühlmedium, die wiederum an jeweils ein Zulauf- und Ablaufsystem für das Heiz- und Kühlmedium angeschlossen sind.

Eine bevorzugte Ausführungsform der vorliegenden Erfindung ist auch eine Vorrichtung zur Herstellung von Formhäuten und Formkörpern aus Kunststoff, in der erfinderische Form zum Einsatz kommt, die als doppelwandiger Hohlkörper ausgebildet ist, wobei die Vorder- und/oder Rückwand der Form mindestens eine Hohlkammer aufweist. Neben dieser Form umfasst die Vorrichtung einen auf die Form aufsetzbaren Kasten, der Kunststoffmaterial als Pulver, Granulat oder Flüssigkeit enthält, einen Drehrahmen, der mit dem Tragrahmen der Form verbunden ist und mit dessen Hilfe die Form in der Vorrichtung gedreht wird, sowie eine Programmsteuerung zur Einstellung eines Temperaturprofils.

Gegenstand der Erfindung ist auch ein Verfahren zur Herstellung von Formhäuten und Formkörpern aus Kunststoff, wobei zunächst ein auf der erfinderischen Form aufsetzbarer Kasten, der Kunststoffmaterial aus Pulver, Granulat oder Flüssigkeit enthält, an der Form, die als doppelwandiger Hohlkörper ausgebildet ist, dessen Vorderwand und/oder Rückwand mindestens eine Hohlkammer aufweisen, befestigt wird. Anschließend wird der Kasten mit Form zum Umschütten des Kunststoffmaterials aus dem Kasten in die Form gedreht und sobald das Kunststoffmaterial in der Form vorliegt, wird mit einem entsprechenden Temperaturprogramm eine Kunststoffhaut auf der Innenkontur der Form abgeschieden, wobei die Temperatur der Form mit Hilfe eines Heizmediums, vorzugsweise Öl, eingestellt wird. Das anschließende Erstarren der Formhaut oder des Formkörpers kann durch eine entsprechende Kühlung beschleunigt werden. Das Heiz- oder Kühlmedium wird vorteilhaft im Kreislauf gefahren und steht über entsprechende Ein- und Auslauföffnungen sowie Zu- und Ablaufsysteme mit dem doppelwandigen Hohlkörper in einer Fluidverbindung.

Eine bevorzugte Ausführungsform der vorliegenden Erfindung sieht vor, dass die die Formgebung bewirkende Vorderwand auswechselbar an der Rückwand befestigt ist, so dass durch einfaches Auswechseln der Vorderwand mit der gleichen Vorrichtung unterschiedlicher Formhäute produziert werden können.

Im Folgenden wird die Erfindung anhand von Zeichnungen näher erläutert. Dabei zeigen:
- Figur 1: einen Querschnitt durch Vorderwand und Rückwand des doppelwandigen Hohlkörpers und
- Figur 2: einen Längsschnitt durch eine Vorderwand oder Rückwand in der Draufsicht.

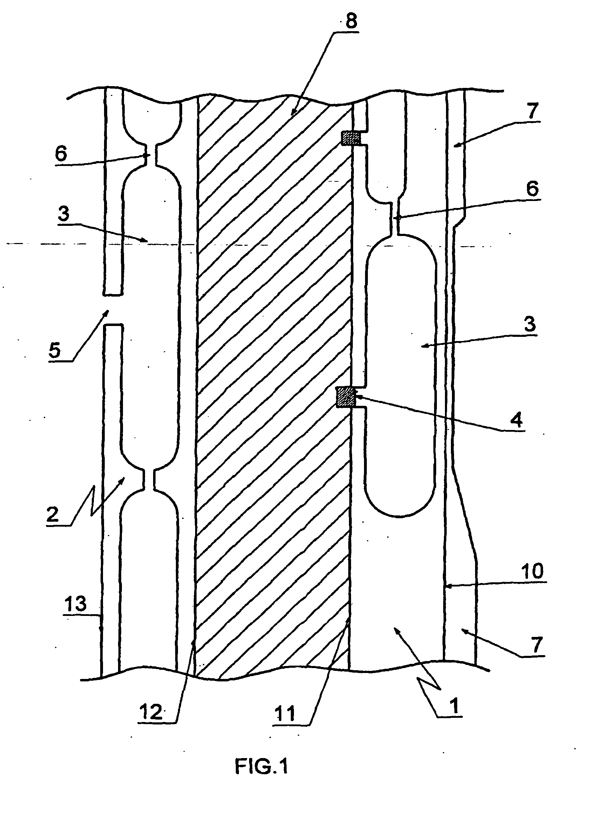

Der Querschnitt des doppelwandigen Hohlkörpers in Figur 1 zeigt einen Ausschnitt einer mit zwei Hohlkammern 3 ausgerüsteten Vorderwand 1, wobei die Hohlkammern 3 eine unterschiedliche Dicke aufweisen und ihr Abstand zur formgebenden Seite 10 der Vorderwand 1 unterschiedlich ausfällt. Aus dieser Anordnung der Hohlkammern 3 resultieren im Fertigungsprozess unterschiedliche Schichtdicken in der Kunststoffschicht 7, da die jeweiligen Bereiche der formgebenden Vorderseite 10 unterschiedliche Temperaturen aufweisen. So wird in dem Bereich der Vorderseite 10, in der keine Hohlkammer 3 vorhanden ist, die Temperatur uneingeschränkt übertragen, so dass an dieser Stelle viel Kunststoffmaterial aufgeschmolzen und eine entsprechend dicke Formhaut 7 ausgebildet wird.

Die Hohlkammer 3 in Figur 1 mit dem größeren Durchmesser erstreckt sich fast bis zur formgebenden Vorderseite 10 der Vorderwand 1, was eine entsprechend gute Isolierung mit sich bringt, so dass an dieser Stelle die Kunststoffhaut 7 lediglich eine dünne Schicht bildet. Bei einer Weiterbildung einer derartigen Ausgestaltung kann in Abhängigkeit vom Schmelzpunkt des eingesetzten Kunststoffmaterial eine Abscheidung vollkommen unterbunden werden. So ist es insbesondere bei der galvanischen Herstellung von Formwänden 1, 2 möglich, die Hohlkammer 3 bis nahe an die Außenseiten 10, 13 der Wände 1, 2 auszubilden, so dass im Falle der Vorderwand 1 eine optimale Isolierung ein Abscheiden einer Kunststoffhaut 7 an dieser Stelle verhindert.

Im Bereich der Hohlkammer 3 mit dem geringeren Durchmesser ist die Isolierung nicht so ausgeprägt und die Formhaut 7 bildet in diesem Bereich eine mittlere Schichtdicke aus. In der in Figur 1 dargestellten Ausführungsform sind die einzelnen Hohlkammern 3 mit Verbindungskanälen 6 zu einem Hohlkammersystem verbunden, was den Vorteil hat, dass nicht jede einzelne Hohlkammer 3 mit einem Evakuierungsstopfen 4 oder einer Gasöffnung 5 versehen sein muss. Wie auf in der Figur 1 zu erkennen ist, sind auf der rückwärtigen Seite 11 der Vorderwand 1, die mit dem Kühl- oder Heizmedium 8 in Berührung kommt, die Öffnungen der Hohlkammern 3 mit Evakuierungsstopfen 4 verschlossen, um ein Eindringen des Kühl- bzw. Heizmediums 8 zu verhindern. Eine Evakuierung im Bereich der Vorderwand 1 ist erforderlich, um eine Zerstörung der Vorderwand 1 beim Aufheizen durch Gasausdehnung zu vermeiden.

In der Rückwand 2 dienen die Hohlkammern 3 ausschließlich zur Isolierung und damit zur Energieeinsparung und der Beschleunigung des Fertigungsprozesses. Aus diesem Grund können die Hohlkammern 3 gleichmäßig ausgebildet sein. Auch können die Öffnungen 5 der Hohlkammern 3 offen ausgeführt sein, da sie im Außenbereich der doppelwandigen Formen angeordnet sind und nicht mit den Kühl- oder Heizmedium 8 in Berührung kommen.

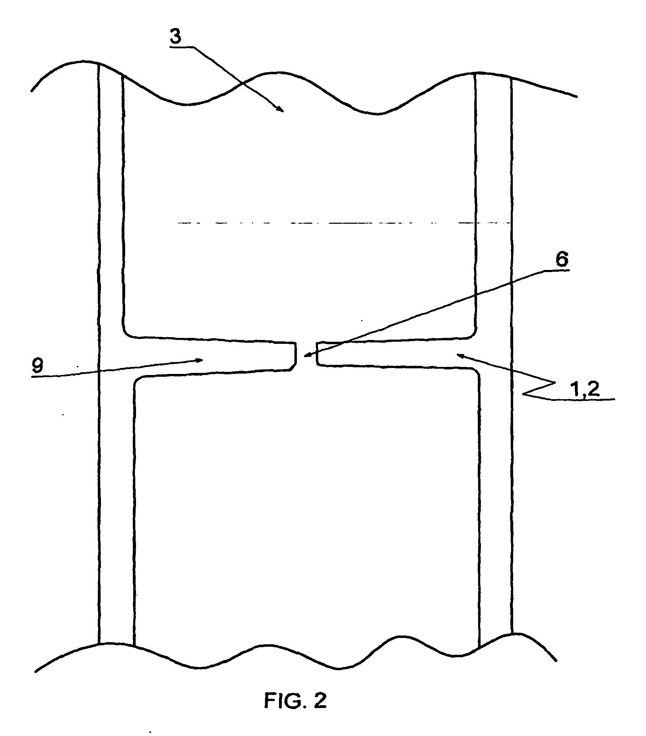

Die Figur 2 zeigt einen Längsschnitt durch eine Vorder- 1 oder Rückwand 2 einer Form zur Herstellung von Formhäuten oder Formkörpern in der Draufsicht, wobei zwei Hohlkammern 3 zu erkennen sind, die mit einem Verbindungskanal 6 miteinander verbunden sind.

Die in den Figuren 1 und 2 dargestellte Ausführungsform mit einzelnen Hohlkammern 3, die über Verbindungskanäle 6 miteinander verbunden sind, hat den Vorteil, dass die Wände der Formen durch die dabei ausgebildeten Stege 9 zwischen den Hohlkammern 3 stabilisiert werden und ein Zusammendrücken des Hohlraums beispielsweise beim Aufheizen verhindert wird. Ausführungsformen mit einzelnen, kleineren oder größeren Hohlkörpern erfüllen den gleichen Zweck, wobei es in diesen Fällen natürlich erforderlich ist, dass jede einzelne Kammer über eine entsprechende Auslassöffnung verfügt, die im Falle der Rückwand 2 offen ist oder bei der Vorderwand 1 mit einem Evakuierungsstopfen 4 versehen ist.

Bei geschmiedeten Formen ist es denkbar, dass die einzelnen Wände selber ganz oder teilweise doppelwandig ausgebildet sind und lediglich durch Stege stabilisiert sind.

### Bezugszeichenliste

| | |
|---|---|
| 1 | Vorderwand |
| 2 | Rückwand |
| 3 | Hohlkammer |
| 4 | Evakuierungsstopfen |
| 5 | Öffnung |
| 6 | Verbindungskanal |
| 7 | Formhaut (Formkörper, Kunststoffschicht) |
| 8 | Kühl- oder Heizmedium |
| 9 | Steg |
| 10 | Vorderseite der Vorderwand |
| 11 | Rückseite der Vorderwand |
| 12 | dem Heiz- und Kühlmedium zugewandte Seite der Rückwand |
| 13 | dem Heiz- und Kühlmedium abgewandte Seite der Rückwand |

## Patentansprüche

1. Form zur Herstellung von Formhäuten (7) und Formkörpern (7) aus Kunststoff, insbesondere für Innenverkleidungen und Armaturentafeln von Kraftfahrzeugen, umfassend einen eine die Formgebung bewirkende Innenkontur (10) aufweisenden doppelwandigen Hohlkörper mit einer formgebenden Vorderwand (1), einer Rückwand (2) sowie einer den Zwischenraum zwischen Vorderwand (1) und Rückwand (2) abschließenden seitlichen Abdichtung, wobei der Hohlkörper zur Zu- und Abfuhr eines Heiz- und Kühlmediums (8) ausgebildet ist und mindestens jeweils eine an ein entsprechendes Zulauf- und Ablaufsystem für das Heiz- und Kühlmedium angeschlossene Einlauf- und Auslauföffnung aufweist,
**dadurch gekennzeichnet, dass**
die Vorderwand (1) und/oder Rückwand (2) mindestens eine den Wärmetransport vom Heiz- und Kühlmedium zur formgebenden Innenkontur (10) der Vorderwand (1) beeinflussende und/oder isolierend wirkende und vor Wärmeverlusten schützende Hohlkammer (3) aufweisen.

2. Form nach Anspruch 1,
**dadurch gekennzeichnet, dass**
die Vorderwand (1) und die Rückwand (2) galvanisch erzeugte Wände sind.

3. Form nach Anspruch 1,
**dadurch gekennzeichnet, dass**
die Form eine geschmiedete und/oder eine geschweißte und/oder eine gelötete Form ist.

4. Form nach einem der Ansprüche 1 bis 3,
**dadurch gekennzeichnet, dass**
die mindestens eine Hohlkammer (3) in der Vorderwand (1) evakuierbar ist.

5. Form nach einem der Ansprüche 1 bis 4,
**dadurch gekennzeichnet, dass** die mindestens eine Hohlkammer (3) in der Rückwand (2) eine auf der dem Heiz- und Kühlmedium (8) abgewandten Seite (13) angeordnete Öffnung (5) aufweist.

6. Form nach einem der Ansprüche 1-bis 5,
**dadurch gekennzeichnet, dass**
die die Formgebung bewirkende Vorderwand (1) auswechselbar ist.

7. Vorrichtung zur Herstellung von Formhäuten (7) und Formkörpern (7) aus Kunststoff, insbesondere für Innenver- -kleidungen und Armaturentafeln von Kraftfahrzeugen, mit
- einer Form nach einem der Ansprüche 1 bis 5,
- einem abdichtend auf die Form aufsetzbaren Kasten, der Kunststoffmaterial als Pulver, Granulat oder Flüssigkeit enthält, und
- einer Vorrichtung zum Drehen der Form, die einen Drehrahmen umfasst, der mit einem Tragrahmen der Form verbunden ist, und
- einer Programmsteuerung zur Einstellung eines Temperaturprofils,
wobei die als doppelwandiger Hohlkörper ausgebildete Form mindestens jeweils eine Einlauf- und Auslauföffnung für ein Heiz- und Kühlmedium (8) aufweist und die Ein- und Auslauföffnungen jeweils an ein entsprechendes Zulauf- und Ablaufsystem für das Heiz- und Kühlmedium (8) angeschlossen sind.

8. Verfahren zur Herstellung von Formhäuten (7) und -körpern (7) aus Kunststoff, insbesondere für Innenverkleidungen und Armaturentafeln von Kraftfahrzeugen, das die folgenden Schritte umfasst:
a) Befestigung eines auf eine Form aufsetzbaren Kastens, der Kunststoffmaterial als Pulver, Granulat oder Flüssigkeit enthält, an eine Form nach einem der Ansprüche 1 bis 5,
b) Drehen des Kastens mit der Form zum Umschütten des Kunststoffmaterials aus dem Kasten in die Form,
c) Auftragen des Kunststoffmaterials auf die Innenköntür 10 der Förm,
d) Zurückdrehen der Form und des Kasten nach Erreichen der gewünschten Wandstärke,
e) Sammeln des überschüssigen Kunststoffmaterials in dem Kasten und
f) Entnehmen der Formhaut 7 oder des Formkörpers 7 aus der Form,
wobei alle Verfahrensschritte, insbesondere die Einstellung des Temperaturprofils des Heiz- und Kühlmediums, programmgesteuert werden.

## Claims

1. A mould for the production of moulded skins (7) and moulded bodies (7) from plastics material, in particular for inner linings and dashboards of motor vehicles, comprising a double-walled hollow body having an inner contour (10) producing the shaping and with a shaping front wall (1), a rear wall (2) and a lateral seal closing off the interspace between the front wall (1) and the rear wall (2), wherein the hollow body is designed for the feed and removal of a heating and cooling medium (8) and has at least one inlet and outlet opening in each case attached to a corresponding supply and discharge system for the heating and cooling medium, **characterized in that** the front wall (1) and/or the rear wall (2) has or have at least one hollow chamber (3) influencing and/or acting in an insulating manner upon the heat conveying of the heating and cooling medium to the shaping inner contour (10) of the front wall (1) and protecting it from heat loss.

2. A mould according to claim 1, **characterized in that** the front wall (1) and the rear wall (2) are walls produced in a galvanic manner.

3. A mould according to claim 1, **characterized in that** the mould is a forged and/or a welded and/or a soldered mould.

4. A mould according to any one of claims 1 to 3, **characterized in that** the at least one hollow chamber (3) in the front wall (1) is capable of being evacuated.

5. A mould according to any one of claims 1 to 4, **characterized in that** the at least one hollow chamber (3) in the rear wall (2) has an opening (5) situated on the side (13) facing away from the heating and cooling medium (8).

6. A mould according to any one of claims 1 to 5, **characterized in that** the front wall (1) producing the shaping is interchangeable.

7. An apparatus for the production of moulded skins (7) and moulded bodies (7) from plastics material, in particular for inner linings and dashboards of motor vehicles, with
- a mould according to any one of claims 1 to 5,
- a box which is capable of being placed in a sealed manner on the mould and which contains plastics material in the form of powder, granulate or liquid, and
- an apparatus for rotating the mould, which comprises a rotating frame which is connected to a support frame of the mould, and
- a program control for setting a temperature profile, wherein the mould designed in the form of a double-walled hollow body has at least one inlet and outlet opening in each case for a heating and cooling medium (8) and the inlet and outlet openings are attached in each case to a corresponding supply and discharge system for the heating and cooling medium (8).

8. A method of producing moulded skins (7) and moulded bodies (7) from plastics material, in particular for inner linings and dashboards of motor vehicles, which comprises the following steps:
a) fastening a box, which is capable of being placed on a mould and which contains plastics material in the form of powder, granulate or liquid, to a mould according to any one of claims 1 to 5,
b) rotating the box with the mould in order to shake the plastics material out of the box into the mould,
c) applying the plastics material to the inner contour 10 of the mould,
d) turning back the mould and the box after achieving the desired wall thickness,
e) collecting the excess plastics material in the box and
f) removing the mould skin 7 or the mould body 7 from the mould,
wherein all the method steps, in particular the setting of the temperature profile of the heating and cooling medium, are controlled by a program.

## Revendications

1. Moule pour la fabrication de peaux moulées (7) et de corps moulés (7) en matériau synthétique en particulier pour des garnitures intérieures ou des tableaux de bord de véhicules automobiles comportant un corps creux à double paroi muni d'un contour interne (10) donnant la conformation avec une paroi avant (1) donnant la conformation, une paroi arrière (2) ainsi qu'une garniture d'étanchéité latérale fermant l'espace intermédiaire situé entre la paroi avant (1) et la paroi arrière (2), le corps creux étant réalisé pour permettre l'introduction et la sortie d'un agent de chauffage et de refroidissement (8), et comportant au moins une ouverture d'entrée et une ouverture de sortie reliées respectivement à un système d'alimentation et de sortie correspondant pour l'agent de chauffage et de refroidissement,
**caractérisé en ce que**
la paroi avant (1) et/ou la paroi arrière (2) comporte(nt) au moins une chambre creuse (3) agissant sur le transport de chaleur entre l'agent de chauffage et de refroidissement et le contour interne donnant la conformation (10) de la paroi avant (1) et/ou ayant une action d'isolation et protégeant contre les pertes de chaleur.

2. Moule conforme à la revendication 1,
**caractérisé en ce que**
la paroi avant (1) et la paroi arrière (2) sont des parois obtenues par voie galvanique.

3. Moule conforme à la revendication 1,
**caractérisé en ce que**
le moule est un moule obtenu par formage, et/ou soudage et/ou brasage.

4. Moule conforme à l'une des revendications 1 à 3,
**caractérisé en ce que**
la chambre (3) située dans la paroi avant (1) peut être mise sous vide.

5. Moule conforme à l'une des revendications 1 à 4,
**caractérisé en ce que**
la chambre creuse (3) située dans la paroi arrière (2) comporte une ouverture (5) située sur sa face (13) située à l'opposée de l'agent de chauffage et de refroidissement (8).

6. Moule conforme à l'une des revendications 1 à 5,
**caractérisé en ce que**
la paroi avant (1) donnant la conformation est interchangeable.

7. Dispositif d'obtention de peaux moulées (7) et de corps moulés (7) en matériau synthétique en particulier pour des garnitures intérieures ou des tableaux de bord de véhicules automobiles comportant :
- un moule conforme à l'une des revendications 1 à 5,
- un caisson pouvant être monté hermétiquement sur le moule et renfermant le matériau synthétique sous la forme de poudre de granulés ou de liquide,
- un dispositif permettant de faire tourner le moule qui renferme un châssis rotatif qui est relié à un châssis support du moule, et
- une commande par programme pour permettre de régler le profil de température,
le moule réalisé sous la forme d'un corps creux à double paroi comportant respectivement au moins une ouverture d'introduction et une ouverture de sortie d'un agent de chauffage et de refroidissement (8) et les ouvertures d'introduction et de sortie étant respectivement reliées à un système d'alimentation et de sortie correspondant de l'agent de chauffage et de refroidissement (8).

8. Procédé d'obtention de peaux moulées (7) et de corps moulés (7) en matériau synthétique en particulier pour des garnitures intérieures et des tableaux de bord de véhicules automobiles comportant les étapes consistant à :
a) fixer un caisson susceptible d'être monté sur un moule renfermant un matériau synthétique sous la forme de poudre, de granulés ou de liquide sur un moule conforme à l'une des revendications 1 à 5,
b) faire tourner le caisson avec le moule pour transférer le matériau synthétique en vrac du caisson dans le moule,
c) appliquer le matériau synthétique sur le contour interne (10) du moule,
d) faire tourner en sens inverse le moule et le caisson après avoir atteint l'épaisseur de paroi souhaitée,
e) collecter le matériau synthétique en excès dans le caisson,
f) extraire la peau moulée (7) ou le corps moulé (7) du moule,
toutes les étapes de procédé, en particulier le réglage du profil de température de l'agent de chauffage et de refroidissement étant commandées de manière programmée.
